# EUROPÄISCHE PATENTSCHRIFT

(11) **EP 2 197 686 B1**
(45) Veröffentlichungstag und Bekanntmachung des Hinweises auf die Patenterteilung: **03.08.2011**
(21) Anmeldenummer: 08802251.2
(22) Anmeldetag: 16.09.2008
(51) Int. Cl.: B42D 15/00, B42D 15/10

(54) **SICHERHEITSELEMENT ZUR KENNZEICHNUNG EINES SICHERHEITSDOKUMENTS UND VERFAHREN ZU SEINER HERSTELLUNG**
SECURITY ELEMENT FOR THE IDENTIFICATION OF A SECURITY DOCUMENT AND METHOD FOR PRODUCING IT
ÉLÉMENT DE SÉCURITÉ POUR CARACTÉRISER UN DOCUMENT DE SÉCURITÉ ET PROCÉDÉ POUR PRODUIRE CET ÉLÉMENT DE SÉCURITÉ

(30) Priorität: 06.10.2007 DE 102007048102
(43) Veröffentlichungstag der Anmeldung: 23.06.2010
(73) Patentinhaber: Leonhard Kurz Stiftung & Co. KG, 90763 Fürth (DE); PolyIC GmbH & Co. KG, 90763 Fürth (DE)
(72) Erfinder: STAHL, Rainer, 90489 Nürnberg (DE); HACKL, Gerrit, 90411 Nürnberg (DE); WEISS, Steffen, 90482 Nürnberg (DE); LUDWIG, Klaus, 91058 Erlangen (DE); SCHAD, Johannes, 90763 Fürth (DE)
(74) Vertreter: Zinsinger, Norbert
(86) Internationale Anmeldenummer: PCT/EP2008/007721
(87) Internationale Veröffentlichungsnummer: WO 2009/043482

(56) Entgegenhaltungen:
- EP-A- 1 813 440
- WO-A-2006/029857
- DE-A1-102004 049 139
- DE-A1-102005 030 626
- DE-A1-102005 052 070
- DE-B3-102006 008 345

## Beschreibung

Die Erfindung betrifft ein Sicherheitselement zur Kennzeichnung eines Sicherheitsdokuments, insbesondere einer Banknote, eines Wertpapier oder eines Papierdokuments, mit mindestens einem elektrisch steuerbaren Anzeigeelement und mindestens einer, das mindestens eine Anzeigeelement steuernden piezoelektrischen Energiequelle, ein mit einem derartigen Sicherheitselement ausgestattetes Sicherheitsdokument, ein Verfahren zur Herstellung eines solchen Sicherheitselements sowie eine Transferfolie mit einem derartigen Sicherheitselement.

Ein Sicherheitsdokument in Form einer mechanisch biegsamen Karte mit einem Sicherheitselement der oben genannten Art ist aus EP 634 732 B1 bekannt. Die biegsame Karte ist zur Gültigkeitskontrolle mit einem Sicherheitselement bzw. einer Kontrolleinrichtung ausgestattet, welche zwei biegsame Elektroden und zwischen diesen einerseits eine erste Struktur umfassend wenigstens eine Schicht aus piezoelektrischem Material, die unter Wirkung einer mechanischen Spannung Ladungen erzeugt, und andererseits eine zweite Struktur aufweist, die unter Einwirkung der Ladungen zwischen mindestens zwei optischen Zuständen umschalten kann. Die Karte gemäß EP 634 732 B1 weist im Bereich der ersten Struktur typischerweise zwei Filme aus einem piezoelektrischen Material mit einer Dicke von 25 µm und im Bereich der zweiten Struktur eine umschaltbare Schicht mit einer Dicke von 50 µm zwischen zwei biegsamen Substraten mit jeweils einer Elektrode auf. Auf einem der Substrate ist eine Beschichtung vorgesehen, die eine Öffnung oder ein Fenster bildet, das die Änderung des optischen Zustands der umschaltbaren Schicht offenbart oder im Durchlicht gesehen sichtbar werden lässt.

In DE 10 2004 049139 A1 ist ebenfalls ein Sicherheitselement zur Kennzeichnung eines Sicherheitsdokuments offenbart.

Eine biegsame Karte, wie ein Personalausweis, eine Kreditkarte oder dergleichen, weist üblicherweise eine Dicke im Bereich von 0,5 bis 1 mm auf, so dass die erste und zweite Struktur relativ einfach in diese integriert werden können.

Zunehmend werden Sicherheitselemente mit elektrisch steuerbaren Anzeigeelementen aber auch zur Kennzeichnung und Sicherung deutlich dünnerer Sicherheitsdokumente, wie beispielsweise Banknoten, Wertpapiere oder Papierdokumente interessant. Diese weisen üblicherweise eine Dicke im Bereich von kleiner als 200 µm, insbesondere im Bereich von 50 µm bis 200 µm, insbesondere im Bereich von 85 µm bis 140 µm auf, wobei Sicherheitselemente, die damit verbunden werden, den Gesamteindruck des Sicherheitsdokuments im Hinblick auf dessen Biegsamkeit und dessen Eigenschaften im täglichen Gebrauch nicht wesentlich beeinträchtigen dürfen.

Es hat sich allerdings gezeigt, dass eine Übertragung des im Kartenbereich bekannten Sicherheitselements auf wesentlich dünnere Sicherheitsdokumente nicht ohne weiteres möglich ist. So zeigten sich Probleme bei der Erzeugung eines entsprechend dünnen, reproduzierbar funktionierenden und gleichzeitig auch den mechanischen Anforderungen gewachsenen Sicherheitselements. Es ist daher Aufgabe der Erfindung ein Sicherheitselement mit mindestens einem elektrisch steuerbaren Anzeigeelement und mindestens einer, das mindestens eine Anzeigeelement steuernden piezoelektrischen Energiequelle für dünne Sicherheitsdokumente mit einer Dicke von kleiner 200 µm bereitzustellen.

Die Aufgabe wird für das Sicherheitselement zur Kennzeichnung eines Sicherheitsdokuments, insbesondere einer Banknote, eines Wertpapiers oder eines Papierdokuments, das mindestens ein elektrisch steuerbares Anzeigeelement und mindestens eine, das mindestens eine Anzeigeelement steuernde piezoelektrische Energiequelle aufweist, gelöst, indem das Sicherheitselement durch einen flexiblen mehrschichtigen Folienkörper gebildet ist, welcher das mindestens eine elektrisch steuerbare Anzeigeelement enthaltend eine Anzeigeschicht mit in einem elektrischen Feld ausrichtbaren Flüssigkristallen und weiterhin die mindestens eine, das mindestens eine Anzeigeelement steuernde piezoelektrische Energiequelle mit mindestens einer Schicht aus piezoelektrischem Material umfasst, wobei das Sicherheitselement in Richtung senkrecht zur Ebene des Folienkörpers eine Dicke von maximal 70 µm aufweist.

Es hat sich gezeigt, dass derartige Sicherheitselemente mit einer Dicke von maximal 70 µm für Sicherheitsdokumente mit einer Dicke von weniger als 200 µm eingesetzt werden können, ohne dass der Gesamteindruck und die Einsetzbarkeit oder Haltbarkeit des Sicherheitsdokuments durch das Sicherheitselement wesentlich beeinträchtig wird.

Das Sicherheitselement ist derart ausgebildet, dass es ein Knicken des Sicherheitsdokuments, auf welches es aufgebracht ist, unbeschadet übersteht. Der minimale Biegeradius für das Sicherheitselement liegt dabei im Bereich der Dicke des Sicherheitsdokuments, vorzugsweise jedoch im Bereich von ≥ 1 mm.

Die zur Erzeugung des Anzeigeelements und der piezoelektrischen Energiequelle erforderlichen Schichten können in einer besonders geringen Schichtdicke ausgebildet werden, insbesondere auch in einer Schichtdicke kleiner etwa 24 µm, bei welcher die jeweiligen Schichten oder das Folienelement selbst nicht mehr selbsttragend sind.

Insbesondere hat es sich für eine erste Ausführungsform des Sicherheitselements bewährt, wenn der Folienkörper einen optionalen ersten Trägerfilm, eine zumindest bereichsweise ausgebildete erste Elektrodenschicht, eine bereichsweise auf der ersten Elektrodenschicht ausgebildete Schicht aus piezoelektrischem Material sowie eine bereichsweise und in gleicher Ebene auf der ersten Elektrodenschicht ausgebildete Anzeigeschicht, eine zumindest bereichsweise ausgebildete optionale transparente Kleberschicht, eine zumindest bereichsweise ausgebildete transparente zweite Elektrodenschicht und optional eine transparente Schutzschicht aufweist.

Für eine zweite Ausführungsform des Sicherheitselements hat es sich bewährt, wenn der Folienkörper einen optionalen ersten Trägerfilm, eine zumindest bereichsweise ausgebildete erste Elektrodenschicht sowie eine zumindest bereichsweise auf dem ersten Trägerfilm in gleicher Ebene ausgebildete zweite Elektrodenschicht, eine bereichsweise auf der ersten und zweiten Elektrodenschicht ausgebildete Schicht aus piezoelektrischem Material sowie eine bereichsweise und in gleicher Ebene auf der ersten und zweiten Elektrodenschicht ausgebildete Anzeigeschicht, optional eine transparente Kleberschicht und optional eine Schutzschicht aufweist.

Die Dicke des optionalen ersten Trägerfilms liegt vorzugsweise im Bereich von 10 µm bis 50 µm. Als zur Bildung des ersten Trägerfilms geeignet haben sich insbesondere Materialien wie PET, PEN, PE, PI, PP, PC, PTFE, Papier, aber auch Metallfolien, durch welche aufgrund der elektrischen Leitfähigkeit gleichzeitig die erste Elektrodenschicht ausgebildet wird, erwiesen. Dabei kann der erste Trägerfilm auch mehrschichtig ausgebildet sein und beispielsweise Einzelschichten aus unterschiedlichen Materialien umfassen. Insbesondere ist der erste Trägerfilm aus zwei oder drei Einzelschichten aufgebaut. Je nach Aufbau des Sicherheitselements kann der erste Trägerfilm als mechanischer Träger für nachfolgend darauf aufgebrachte Schichten Verwendung finden oder aber keinerlei Tragefunktion aufweisen und beispielsweise eine klebende Schicht ausbilden.

Gleichzeitig kann mit dem ersten Trägerfilm die Steifigkeit des dünnen Sicherheitsdokuments im Bereich des Sicherheitselements eingestellt werden, wodurch die Funktionsfähigkeit der piezoelektrischen Energiequelle gesichert wird.

Weiterhin hat es sich für das Sicherheitselement bewährt, wenn die erste und die zweite Ausführungsform kombiniert vorliegen.

Dabei kann beispielsweise das Anzeigeelement in der zweiten Ausführungsform vorliegen, bei der die Elektrodenschichten unterhalb der Anzeigeschicht und in gleicher Ebene nebeneinander angeordnet sind, während die Energiequelle in der ersten Ausführungsform vorliegt, bei der eine Elektrodenschicht unterhalb der Schicht aus piezoelektrischem Material und andere Elektrodenschicht oberhalb der Schicht aus piezoelektrischem Material angeordnet ist.

Dabei hat es sich bewährt, wenn der Folienkörper im Bereich des Anzeigeelements eine zumindest bereichsweise ausgebildete erste Elektrodenschicht sowie eine zumindest bereichsweise in gleicher Ebene ausgebildete zweite Elektrodenschicht, eine bereichsweise auf der ersten und zweiten Elektrodenschicht ausgebildete Anzeigeschicht, optional eine transparente Kleberschicht und optional eine transparente Schutzschicht aufweist, und dass der Folienkörper im Bereich der Energiequelle eine, zumindest bereichsweise ausgebildete weitere zweite Elektrodenschicht, darauf mindestens eine Schicht aus piezoelektrischem Material sowie auf dieser eine weitere erste Elektrodenschicht aufweist, wobei die erste Elektrodenschicht und die zweite Elektrodenschicht des Anzeigeelements jeweils mit einer der weiteren Elektrodenschichten der Energiequelle elektrisch leitend verbunden sind.

Umgekehrt kann das Anzeigeelement in der ersten Ausführungsform vorliegen, bei der eine Elektrodenschicht unterhalb der Anzeigeschicht und die andere Elektrodenschicht oberhalb der Anzeigeschicht angeordnet ist, und die Energiequelle in der zweiten Ausführungsform vorliegen, bei der die Elektrodenschichten unterhalb der Schicht aus piezoelektrischem Material und in gleicher Ebene nebeneinander angeordnet sind.

Dabei hat es sich bewährt, wenn der Folienkörper im Bereich des Anzeigeelements eine zumindest bereichsweise ausgebildete erste Elektrodenschicht, eine bereichsweise auf der ersten Elektrodenschicht ausgebildete Anzeigeschicht, optional eine transparente Kleberschicht, eine zumindest bereichsweise ausgebildete zweite Elektrodenschicht und optional eine transparente Schutzschicht aufweist, und dass der Folienkörper im Bereich der Energiequelle eine bereichsweise ausgebildete erste Elektrodenschicht sowie eine zumindest bereichsweise in gleicher Ebene ausgebildete zweite Elektrodenschicht, darauf mindestens eine Schicht aus piezoelektrischem Material sowie auf dieser optional eine transparente Kleberschicht und optional eine transparente Schutzschicht aufweist, wobei die erste und die zweite Elektrodenschicht des Anzeigeelements jeweils mit einer der Elektrodenschichten der Energiequelle elektrisch leitend verbunden sind.

Vorzugsweise weist der Folienkörper angrenzend an die erste(n) und/oder die zweite(n) Elektrodenschicht(en) mindestens eine Haftvermittlerschicht auf.

Der Einsatz mindestens einer Haftvermittlerschicht im Folienelement gewährleistet eine ausreichende Zwischenschichthaftung zwischen den einzelnen Schichten und die Funktionalität des Sicherheitselements über die gesamte Nutzungsdauer des Sicherheitsdokuments hinweg.

Weiterhin ist es von Vorteil, wenn der Folienkörper eine Stützschicht aufweist, welche senkrecht zur Ebene des Folienkörpers gesehen einen Rahmen um zumindest Bereiche der Anzeigeschicht bildet. Eine derartige Stützschicht trägt zu einer mechanischen Stabilisierung des Anzeigeelements und bei nicht auf gleicher Ebene angeordneten Elektrodenschichten zu einer Vereinheitlichung des Abstands zwischen der ersten und der zweiten Elektrodenschicht im Bereich der Anzeigeschicht bei, so dass das elektrische Feld über den Bereich der Anzeigeschicht möglichst konstant ist und das Anzeigeelement über seine Fläche homogen schaltet.

Zudem kann mittels der Stützschicht eine Versiegelung oder optische Begrenzung des Anzeigeelements und/oder eine Optimierung der Haftung der zweiten Elektrodenschicht erreicht werden.

Die Stützschicht ist sowohl für die erste als auch die zweite Ausführungsform sowie daraus kombinierte Ausführungsformen elektrisch isolierend ausgebildet, um einen elektrischen Kurzschluss zwischen der ersten und der zweiten Elektrodenschicht, insbesondere auch im Übergangsbereich zwischen dem Anzeigeelement und der Energiequelle, zu vermeiden. Die Anzeigeschicht kann dabei in ihrer Flächenausdehnung kleiner, gleich oder größer ausgebildet sein als der durch den Rahmen umschlossene Bereich.

Sowohl bei der ersten als auch der zweiten Ausführungsform bildet die Stützschicht vorzugsweise mindestens einen Steg, der mit der Anzeigeschicht überlappt. Ein derartiger Steg kann dabei mit dem Rahmen in Verbindung stehen oder von diesem losgelöst angeordnet sein. Unter einem Steg werden dabei, senkrecht zum ersten Trägerfilm gesehen, linienförmige, punktförmige oder flächige Gebilde verstanden.

Dabei kann ein linienförmiger Steg eine Gerade, eine Wellenlinie oder eine Umrisslinie, beispielsweise einer figürlichen Darstellung, eines Symbols, eines Musterbereichs und dergleichen ausbilden. Ein punktförmiger Steg kann einen kreisförmigen, ovalen, eckigen, buchstabenförmigen oder in sonstiger Weise graphisch geformten Umriss aufweisen. Ein flächiger Steg besitzt eine deutlich größere Flächenausdehnung als ein linien- oder punktförmiger Steg, so dass hier auch komplexere Umrisse realisierbar sind. Der mindestens eine Steg ermöglicht eine weitere mechanische Stabilisierung des Anzeigeelements. Insbesondere ist es bevorzugt, wenn mehrere Stege vorhanden sind, die vorzugsweise zusammen ein gitterförmiges Gebilde innerhalb des von der Stützschicht weiterhin gebildeten Rahmens bilden.

Vorzugsweise ist die Stützschicht aus einem UV-gehärteten Lack, einer thermisch trocknenden Druckfarbe oder dem gleichen Material wie die Schicht aus piezoelektrischem Material gebildet. Prinzipiell ist aber jede Schicht geeignet, die zu einer mechanischen Versteifung und Erhöhung der mechanischen Belastbarkeit des Anzeigeelements beiträgt und sich, insbesondere während eines Laminiervorgangs, weniger komprimieren lässt als die Anzeigeschicht. So sind insbesondere elektrisch isolierende Siebdruckfarbenschichten mit einem hohen Pigmentanteil oder ähnliches verwendbar.

Besonders bevorzugt ist es, wenn die Stützschicht ein visuell erkennbares Designelement bildet. Dazu ist die Stützschicht insbesondere eingefärbt, wobei zumindest bereichsweise eine transparente eingefärbte Stützschicht und/oder zumindest bereichsweise eine opake eingefärbte Stützschicht vorliegen kann. Die Stützschicht bildet für einen Betrachter des Sicherheitselements bevorzugt eine saubere Umrandung für die Anzeigeschicht, um gegebenenfalls vorhandene unsaubere Ränder der Anzeigeschicht zu verdecken oder zumindest im Wesentlichen zu verbergen. Zudem weist die Stützschicht vorzugsweise einen graphisch gestalteten Umriss auf und zeigt beispielsweise eine figürliche Darstellung, ein Bild, ein Motiv, ein Symbol, ein Logo, ein Portrait, ein Muster, alphanumerische Zeichen, einen Text und dergleichen. So kann sich das Designelement durch eine farbliche oder eine farbliche und graphische Gestaltung des Umrisses der Stützschicht ergeben.

Die erste Elektrodenschicht weist vorzugsweise eine Schichtdicke im Bereich von 1 nm bis 500 nm auf. Dabei kann die erste Elektrodenschicht opak oder zumindest lokal transparent ausgebildet sein. Zur Bildung der ersten Elektrodenschicht haben sich Metalle oder Metall-Legierungen, wie Aluminium, Silber, Gold, Chrom, Kupfer und dergleichen, leitfähige nichtmetallisch anorganische Materialien wie Indiumzinnoxid (ITO) und dergleichen, Kohlenstoffnanoröhrchen, und leitfähige Polymere, wie PEDOT, PANI, und dergleichen bewährt.

Die zweite Elektrodenschicht ist zumindest in der ersten Ausführungsform zumindest lokal transparent ausgebildet und weist vorzugsweise eine Schichtdicke im Bereich von 1 nm bis 500 nm auf. Zur Bildung einer zumindest lokal transparenten zweiten Elektrodenschicht haben sich dünne Schichten aus Metall oder Metall-Legierungen, insbesondere aus Aluminium, Silber, Gold, Chrom, Kupfer und dergleichen, aus leitfähigen nichtmetallisch anorganischen Materialien, insbesondere aus Indiumzinnoxid (ITO) und dergleichen, aus Kohlenstoffnanoröhrchen und aus transparenten leitfähigen Polymeren, insbesondere aus PEDOT, PANI, und dergleichen bewährt.

Die Bildung der Elektrodenschichten erfolgt insbesondere bei Bildung metallischer oder nichtmetallisch anorganischer Elektrodenschichten bevorzugt durch Aufdampfen oder Sputtern, oder insbesondere bei der Bildung polymerer Elektrodenschichten durch gängige Druckverfahren, wie Siebdruck, Hochdruck, Tiefdruck oder ein Aufrakeln.

Aber auch die Verwendung einer Transferfolie zur Bildung von Elektrodenschichten mittels Prägens ist möglich.

Bei einer lediglich bereichsweisen Ausbildung von Elektrodenschichten werden durch diese insbesondere Muster, Motive, Gitter oder dergleichen ausgebildet. Vorzugsweise sind derartige Muster oder Motive visuell und ohne weitere Hilfsmittel erkennbar.

Die Schutzschicht ist vorzugsweise als zweiter Trägerfilm, welcher selbsttragend ist, oder als Schutzlackschicht, welche aufgrund ihrer geringen Schichtdicke nicht selbsttragend ist, ausgebildet. Vorzugsweise sind der erste und der zweite Trägerfilm aus dem gleichen Material gebildet.

Die Schutzschicht ist vorzugsweise farbig transparent ausgebildet. Die Schutzschicht ist insbesondere aus PET, PEN, PE, PI, PP, PC oder PTFE gebildet.

Es hat sich bewährt, wenn der Folienkörper auf einer Transferfolie bereitgestellt wird, so dass eine Applikation des Sicherheitselements auf ein Sicherheitsdokument mittels Prägens erfolgen kann. Eine solche Transferfolie weist mindestens ein erfindungsgemäßes Sicherheitselement auf, wobei das mindestens eine Sicherheitselement auf einer Trägerfolie der Transferfolie angeordnet ist und von dieser ablösbar ist.

Ausgehend von der Trägerfolie der Transferfolie ist hier üblicherweise eine Ablöseschicht vorhanden, um das Folienelement nach dem Prägen von der Trägerfolie der Transferfolie lösen zu können. Auf einer der Trägerfolie der Transferfolie abgewandten Seite der Ablöseschicht ist vorzugsweise die, als Schutzlackschicht ausgebildete optionale transparente Schutzschicht und weiterhin der übrige Aufbau des Sicherheitselements vorhanden.

Der Folienkörper kann mittels einer Klebstoffschicht, insbesondere aus einem Kalt- oder Heißkleber, am Sicherheitsdokument fixiert werden. Die Klebstoffschicht kann aber auch bereits durch den ersten Trägerfilm gebildet sein, der hier nicht als mechanischer Träger fungieren muss.

Es hat sich bewährt, wenn die transparente Kleberschicht im Inneren des Sicherheitselements eine Schichtdicke von maximal 2 µm aufweist.
Die transparente Kleberschicht wird aus einem elektrisch leitfähigen Material oder aus einem elektrisch isolierenden Material gebildet, wobei letzteres bevorzugt ist.
Bei Verwendung einer elektrisch leitfähigen Kleberschicht für die erste Ausführungsform des Sicherheitselements wird ein elektrischer Kontakt zwischen der Anzeigeschicht und der zweiten Elektrodenschicht sowie der Schicht aus piezoelektrischem Material und der zweiten Elektrodenschicht erzeugt, während bei Verwendung einer Kleberschicht aus elektrisch isolierendem Material, insbesondere bei einer vollflächig ausgebildeten Kleberschicht, eine kapazitive Ankopplung der Anzeigeschicht sowie der Schicht aus piezoelektrischem Material erfolgt, bei der kein elektrischer Kontakt zwischen der Anzeigeschicht und der zweiten Elektrodenschicht sowie der Schicht aus piezoelektrischem Material und der zweiten Elektrodenschicht vorhanden ist. Dennoch ist das Anzeigeelement funktionsfähig, wenn die in der Energiequelle erzeugbare Polarisation ausreichend hoch ist, so dass zwischen der ersten und der zweiten Elektrodenschicht ein genügend großes elektrisches Feld ausgebildet wird, das einen Wechsel des optischen Zustands der Anzeigeschicht bewirkt.

Bevorzugt ist die Kleberschicht aus einem unter UV-Bestrahlung vernetzenden Kleber, einem photochemisch oder thermisch aktivierbaren Kleber, einem Kaltkleber oder einem druckempfindlichen Kleber (PSA) gebildet.

Nach Bildung der Schicht aus piezoelektrischem Material wird eine Polarisierung dieser durchgeführt, welche insbesondere in einem Rolle-zu-Rolle-Verfahren erfolgt. Dabei wird ein selbsttragender erster Trägerfilm bandförmig eingesetzt und auf eine Rolle aufgewickelt bereitgestellt. Von dieser Rolle wird der erste Trägerfilm abgezogen und nacheinander unterschiedlichen Prozesseinheiten zugeführt, um die einzelnen Schichten darauf aufzubringen.

Nach Bildung der Schicht aus piezoelektrischem Material wird in der ersten Ausführungsform auf diese vorzugsweise eine zusätzliche elektrisch leitende transparente Hilfsschicht aufgebracht, um deren Polarisation besser durchführen zu können.

Bei der ersten Ausführungsform wird über die Schichtdicke der Anzeigeschicht vorzugsweise ein elektrisches Feld von mindestens 50 MV/m angelegt. Dazu werden die erste Elektrodenschicht und die zusätzliche elektrisch leitende Hilfsschicht oder die erste Elektrodenschicht und die zweite Elektrodenschicht elektrisch kontaktiert und mit einer Spannung insbesondere im Bereich von 500V bis 20 kV versorgt.
Bei der zweiten Ausführungsform wird analog dazu verfahren, wobei die Spannung zwischen den in einer Ebene angeordneten ersten und zweiten Elektrodenschichten angelegt wird.

Dabei hat es sich bewährt, wenn die Schicht aus piezoelektrischem Material zumindest im Bereich der Energiequelle zusätzlich auf ihrer der ersten Elektrodenschicht abgewandten Seite mit der elektrisch leitfähigen Hilfsschicht versehen ist, die die Kontaktierung der zu polarisierenden Schicht aus piezoelektrischem Material zur Durchführung des Polarisationsvorgangs verbessert. Die Hilfsschicht ist insbesondere aus einem elektrisch leitfähigen Polymer wie PEDOT oder PANI gebildet, aber auch transparente metallische Schichten, transparente dielektrische Schichten, wie beispielsweise aus ITO (Indium Tin Oxide), oder Schichten enthaltend Kohlenstoffnanoröhrchen sind geeignet. Vorzugsweise wird die Hilfsschicht auf die Schicht aus piezoelektrischem Material aufgedruckt. Ein elektrischer Kurzschluss zwischen der Hilfsschicht und der/den Elektrodenschicht(en) auf der, der Hilfsschicht abgewandten Seite der Schicht aus piezoelektrischem Material ist zu vermeiden.

Die Schicht aus piezoelektrischem Material ist insbesondere in der ersten Ausführungsform zumindest im Bereich der piezoelektrischen Energiequelle vorzugsweise von einer größeren Flächenausdehnung als die, der Energiequelle zugeordneten Bereiche der Elektrodenschichten, so dass im Bereich der Energiequelle die Schicht aus piezoelektrischem Material die Elektrodenschichten an drei von vier Kanten überragt. Dadurch wird zuverlässig ein elektrischer Kurzschluss zwischen der ersten und zweiten Elektrodenschicht vermieden. Im Bereich der vierten Kante grenzt an die Energiequelle das Anzeigeelement an.

Die Schicht aus piezoelektrischem Material weist vorzugsweise eine Schichtdicke von maximal 30 µm, insbesondere von maximal 5 µm auf. Derart dünne Schichten aus piezoelektrischem Material sind insbesondere durch Drucken herstellbar, wobei die Fähigkeit zur Erzeugung einer elektrischen Spannung beim Aufbringen einer Biegebelastung überraschender Weise erhalten bleibt, wenn eine geeignete Steifigkeit vorhanden ist.

Die Energiequelle kann aber nicht nur durch Biegen, sondern auch thermisch über einen Temperaturgradienten, der über die Schicht aus piezoelektrischem Material angelegt wird, aktiviert werden.

Es wurde erkannt, dass das Aufbringen einer Schicht aus piezoelektrischem Material in einer derartig geringen Schichtdicke auf ein Sicherheitsdokument nicht zu einer funktionierenden piezoelektrischen Energiequelle führt, wenn nicht gleichzeitig im Bereich der Energiequelle für eine geeignete Steifigkeit gesorgt wird. Die Spannungsausbeute der Schicht aus piezoelektrischem Material kann über die Steifigkeit des Verbunds aus Sicherheitselement und Sicherheitsdokument im Bereich der Energiequelle eingestellt werden. Dabei ist eine Abstimmung der Steifigkeit des Verbunds aus Sicherheitselement und Sicherheitsdokument im Bereich der Energiequelle dahingehend erforderlich, dass einerseits die zum Schalten des Anzeigeelements mindestens notwenige elektrische Spannung bzw. Feldstärke erzeugt werden muss und andererseits die Eigenschaften des dünnen Sicherheitsdokuments lokal nicht so stark verändert werden dürfen, dass die Steifigkeit zu einer Beeinträchtigung in der Handhabung oder Lebensdauer des Sicherheitsdokuments führt.

Es hat sich bewährt, wenn als piezoelektrisches Material ein Polymer, insbesondere vom Typ Polyvinylidenfluorid PVDF, eingesetzt wird. Aber auch andere piezoelektrische Materialien, wie Polyamide, Polyurethane, Fluorpolymere und insbesondere davon abgeleitete Copolymere sind verwendbar.

Vorzugsweise weist die Anzeigeschicht eine Schichtdicke von maximal 20 µm, insbesondere von maximal 5 µm auf. Die Anzeigeschicht ist insbesondere aus mindestens einer Schicht PDLC (= Polymer Dispersed Liquid Crystal) gebildet. Aber auch die Verwendung anderer Materialien, welche sich unter Einfluss von Strom oder Spannung optisch verändern, beispielsweise einen Farbumschlag generieren oder aufleuchten, sind zur Bildung der Anzeigeschicht verwendbar, wie beispielsweise elektrochrome Materialien, Schichtsysteme zur Bildung von Leuchtdioden oder elektrophoretische Anzeigeelemente.

Besonders bevorzugt ist es, wenn die Anzeigeschicht unter Einwirkung des elektrischen Feldes, das insbesondere durch die piezoelektrische Energiequelle durch Biegen derselben zwischen der ersten und der zweiten Elektrodenschicht erzeugt wird, transparent ist. Dadurch können Informationen, die auf der dem Betrachter abgewandten Seite der Anzeigeschicht angeordnet sind, freigelegt und durch die transparente Anzeigeschicht hindurch ausgelesen werden. Das Auslesen solcher Informationen erfolgt insbesondere visuell und ohne weitere Hilfsmittel.

Es hat sich bewährt, wenn die erste(n) und gegebenenfalls zweite(n) Elektrodenschicht(en) eine diffraktive Reliefstruktur aufweist/aufweisen, welche einen optisch variablen Effekt generiert. Die diffraktive Reliefstruktur ist vorzugsweise in eine, der ersten Elektrodenschicht zugewandte Oberfläche des ersten Trägerfilms eingebracht, insbesondere eingeprägt. Die Reliefstruktur kann alternativ oder in Kombination dazu auch in die Schicht aus piezoelektrischem Material geprägt sein, wobei vorzugsweise die zweite Elektrodenschicht als Reflektionsschicht fungiert.

Der erste Trägerfilm ist dabei aus einem prägbaren thermoplastischen Material gebildet oder umfasst auf seiner, der ersten Elektrodenschicht zugewandten Oberfläche eine prägbare Schicht, insbesondere eine Replizierlackschicht aus einem UV-gehärteten Lack oder einem thermoplastischen Material, in welche die diffraktive Reliefstruktur eingebracht, insbesondere eingeprägt ist. Die angrenzende(n) Elektrodenschicht(en) werden auf der diffraktiven Reliefstruktur so dünn ausgebildet, dass sich die Reliefstruktur auf der, dem ersten Trägerfilm abgewandten Seite der Elektrodenschicht(en) abformt. Der optisch variable Effekt wird durch Beugung des einfallenden Lichts an der abgeformten Reliefstruktur erzeugt, wobei insbesondere blickwinkelabhängige Farb- und/oder Motivwechsel, Helligkeitswechsel, Hologramme, Kinegram^{®}e und dergleichen ausgebildet werden. Die Elektrodenschicht(en), welche die Reliefstruktur abformt/abformen, ist/sind dabei vorzugsweise als Reflektionsschicht(en) aus Metall und/oder einem hochbrechenden transparenten Material ausgebildet, um die durch die Reliefstruktur generierten optisch variablen Effekte klar hervortreten zu lassen.

Vorzugsweise ist die Reliefstruktur in einem, mit der Schicht aus piezoelektrischem Material überlappenden ersten Bereich der ersten und gegebenenfalls zweiten Elektrodenschicht(en) angeordnet und/oder in einem, mit der Anzeigeschicht überlappenden zweiten Bereich der ersten und gegebenenfalls zweiten Elektrodenschicht(en) angeordnet.

Dabei hat es sich als vorteilhaft erwiesen, wenn die Stützschicht derart ausgestaltet ist, dass ein durch diese gebildetes Designelement mit dem durch die diffraktive Reliefstruktur erzeugten optisch variablen Effekt zusammenwirkt, insbesondere wenn diese einen als zusammengehörig erkennbaren Informationsgehalt vermitteln. Weiterhin hat es sich bewährt, wenn eine Information, welche erst bei einer transparent geschalteten Anzeigeschicht erkennbar wird, mit dem Designelement und dem optisch variablen Effekt zusammen wirkt und einen als zusammengehörig erkennbaren Informationsgehalt vermitteln.

Besonders bevorzugt ist es, wenn der erste Trägerfilm und/oder die erste Elektrodenschicht und/oder die zweite Elektrodenschicht transparent ist/sind. Weiterhin ist es von Vorteil, wenn die Schicht aus piezoelektrischem Material und/oder die Stützschicht transparent ist/sind.

Besonders bevorzugt ist es, wenn das Sicherheitselement insgesamt, sofern auch die Anzeigeschicht in den transparenten optischen Zustand geschaltet ist, transparent ist.

Die Aufgabe wird für das Sicherheitsdokument, insbesondere eine Banknote, ein Wertpapier oder ein Papierdokument, mit mindestens einem erfindungsgemäßen Sicherheitselement gelöst, wobei das Sicherheitsdokument eine Dicke von maximal 200 µm, insbesondere eine Dicke im Bereich von 50 bis 200 µm, hierbei bevorzugt im Bereich von 85 bis 140 µm, aufweist.

Das mindestens eine Sicherheitselement kann dabei streifenförmig oder in Form eines Labels auf dem Sicherheitsdokument ausgebildet sein.

Weiterhin ist es von Vorteil, wenn das Sicherheitsdokument nach Applikation des mindestens einen Sicherheitselements mit mindestens einer opaken Druckfarbe und/oder mindestens einem opaken Farblack bedruckt wird, wobei lediglich Bereiche des Sicherheitselements damit bedeckt werden.

Die Steifigkeit des Verbunds aus Sicherheitsdokument und Sicherheitselement im Bereich der piezoelektrischen Energiequelle ist dabei so einzustellen, dass sich die eingeprägte Kraft und die dadurch verursachte mechanische Spannung auf weitere Bereiche der Energiequelle, insbesondere auf den ganzen Bereich der Energiequelle, verteilt, um beim Biegen der Schicht aus piezoelektrischem Material eine ausreichend hohe Spannung zum Schalten des Anzeigeelements zu erzeugen. Die Steifigkeit kann generell vor oder nach einer Applikation des Sicherheitselements auf das Sicherheitsdokument durch ein gezieltes bereichsweises Aufbringen opaker Druckfarbe und/oder eines opaken Farblack und/oder ein Aufbringen weiterer, auch vollflächiger transparenter Schichten beeinflusst und in den geforderten Bereich gebracht werden.

Es ist bevorzugt, wenn zumindest das elektrisch steuerbare Anzeigeelement des mindestens einen Sicherheitselements zumindest bereichsweise in einem transparenten Bereich des Sicherheitsdokuments angeordnet ist. Das Sicherheitselement kann dabei einen transparenten Bereich, der als Fensteröffnung ausgebildet ist überspannen oder im Bereich einer transparenten Folie auf dem Sicherheitsdokument angeordnet sein. Dadurch ist eine beidseitige Betrachtung des Anzeigeelements möglich, sofern im Bereich des Anzeigeelements transparente erste und zweite Elektrodenschichten gewählt sind.

Das mindestens eine Sicherheitselement kann dabei auf dem Sicherheitsdokument angeordnet oder in dieses eingebettet sein. Auf eine Oberfläche des Sicherheitsdokuments wird das mindestens eine Sicherheitselement vorzugsweise durch Prägen unter Verwendung einer Transferfolie oder Laminierfolie aufgebracht. Ein Einbringen innerhalb des Sicherheitsdokuments erfolgt vorzugsweise bereits während der Herstellung des Sicherheitsdokuments. So kann bei einem Sicherheitsdokument aus Papier das mindestens eine Sicherheitselement bereits während der Papierherstellung in das Papier eingebracht werden.

Die Aufgabe wird für das Verfahren zur Herstellung des erfindungsgemäßen Sicherheitselements gelöst, indem die Schicht aus piezoelektrischem Material und/oder die Anzeigeschicht und/oder die Stützschicht und/oder die Kleberschicht durch Drucken gebildet werden.

Das Druckmedium zur Bildung einer solchen gedruckten Schicht wird dabei insbesondere in Form einer Paste, einer Tinte, eines Lackes oder einer Lösung bereitgestellt. Das Verdrucken besonders dünnflüssiger Druckmedien führt insbesondere dann zum Verlaufen oder zu unsauberen Schichträndern der gebildeten Schicht, wenn in einem einzigen Druckvorgang die gesamte Menge an Druckmedium, das zur Erreichung der benötigten Schichtdicke der jeweiligen trockenen Schicht benötigt wird, verdruckt wird. Ein mehrmaliges Drucken eines dünnflüssigen Druckmediums enthaltend identisches Feststoffmaterial, wobei auf eine zumindest weitgehend trockene erste Schicht erneut ein derartiges Druckmedium gedruckt wird, ermöglicht den Aufbau einer homogenen, funktionsfähigen Schicht in gewünschter Schichtdicke mit sauberen Konturen. Ein Verlaufen oder unsaubere Schichtränder werden dadurch wirkungsvoll vermieden.

Insbesondere eignen sich hierfür Druckprozesse wie ein Flachsiebdruck, ein Rollensiebdruck, ein Tiefdruck, ein Hochdruck oder ein Aufrakelverfahren. Ein Druckverfahren ermöglicht in besonders ökonomischer Weise die Bildung besonders dünner Schichten zur Bildung des Sicherheitselements bzw. die Bildung von Sicherheitselementen mit einer Dicke von maximal 70 µm, welche zur Kennzeichnung und Sicherung von Sicherheitsdokumenten mit einer Dicke von maximal 200 µm eingesetzt werden können.

Die Aufgabe wird für das Verfahren zur Herstellung des erfindungsgemäßen Sicherheitselements gemäß der ersten Ausführungsform enthaltend eine Schutzschicht weiterhin gelöst, indem ein erster Schichtstapel gebildet wird, indem auf dem ersten Trägerfilm zumindest die erste Elektrodenschicht, die Schicht aus piezoelektrischem Material, die optionale Hilfsschicht, die Anzeigeschicht und die optionale Stützschicht gebildet werden, indem ein zweiter Schichtstapel gebildet wird, indem auf der Schutzschicht zumindest die zweite Elektrodenschicht und die Kleberschicht gebildet werden, und indem der erste und der zweite Schichtstapel verbunden werden, indem die Kleberschicht des zweiten Schichtstapels auf eine, dem ersten Trägerfilm abgewandte Seite des ersten Schichtstapels laminiert wird.

Die Aufgabe wird für das Verfahren zur Herstellung des erfindungsgemäßen Sicherheitselements gemäß der zweiten Ausführungsform gelöst, indem ein erster Schichtstapel gebildet wird, indem auf dem ersten Trägerfilm zumindest die erste und die zweite Elektrodenschicht, die Schicht aus piezoelektrischem Material, die Anzeigeschicht und die optionale Stützschicht gebildet werden, indem ein zweiter Schichtstapel gebildet wird, indem auf der Schutzschicht zumindest die Kleberschicht gebildet wird, und der erste und der zweite Schichtstapel verbunden werden, indem die Kleberschicht des zweiten Schichtstapels auf eine, dem ersten Trägerfilm abgewandte Seite des ersten Schichtstapels laminiert wird.

Dabei hat es sich bewährt, wenn der erste Schichtstapel gebildet wird, indem der erste Trägerfilm von Rolle zu Rolle transportiert wird und dabei auf dem ersten Trägerfilm nacheinander zumindest die erste Elektrodenschicht, die Schicht aus piezoelektrischem Material; die Anzeigeschicht und die optionale Stützschicht gebildet werden.

Vorzugsweise wird der zweite Schichtstapel gebildet, indem die Schutzschicht von Rolle zu Rolle transportiert wird und dabei auf der Schutzschicht gegebenenfalls die zweite Elektrodenschicht und zumindest die Kleberschicht gebildet werden.

Bei Ausbildung des Folienelements auf einer Transferfolie wird auf eine Trägerfolie in einem Rolle-zu-Rolle-Verfahren eine Ablöseschicht und auf diese die als Schutzlackschicht ausgebildete Schutzschicht aufgebracht, insbesondere gedruckt. Auf der Schutzlackschicht werden nun nacheinander die weiteren Schichten des Folienelements gebildet.

Weiterhin ist es von Vorteil, wenn zudem zumindest eine Schicht aus der Gruppe umfassend eine Haftvermittlerschicht, die erste Elektrodenschicht und die zweite Elektrodenschicht durch Drucken gebildet werden.

Die Figuren 1 bis 7b zeigen beispielhaft unterschiedliche erfindungsgemäße Sicherheitselemente, ein damit ausgestattetes Sicherheitsdokument und eine Transferfolie zum Applizieren eines Sicherheitselements mittels Prägens. So zeigt
- Figur 1a: ein erstes Sicherheitselement im Querschnitt;

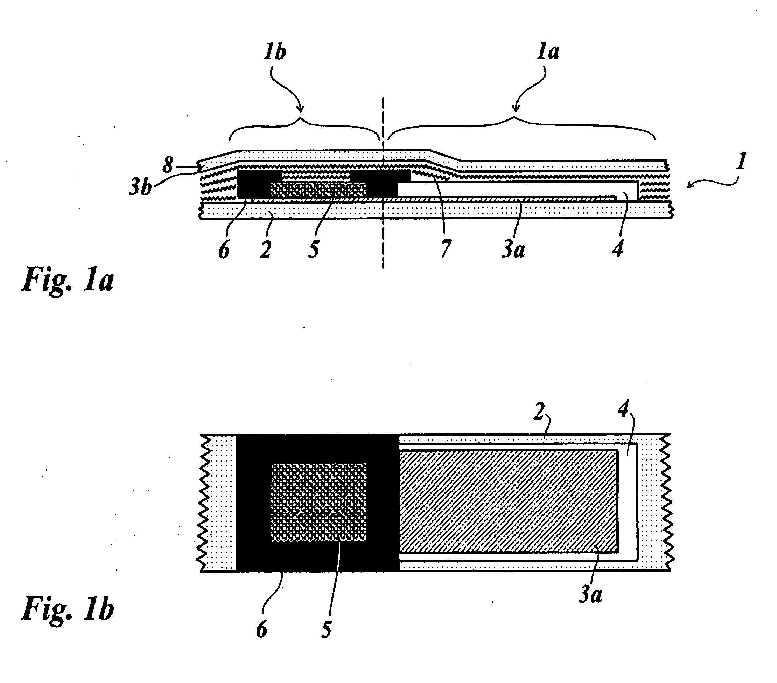

- Figur 1 b: den ersten Schichtstapel des ersten Sicherheitselements aus Figur 1a in der Draufsicht;

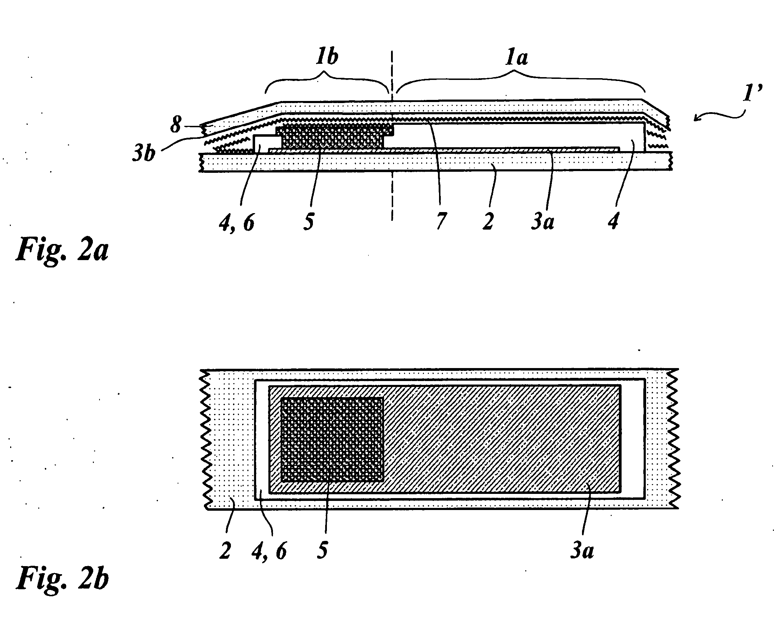

- Figur 2a: ein zweites Sicherheitselement im Querschnitt;
- Figur 2b: den ersten Schichtstapel des zweiten Sicherheitselements aus Figur 2a in der Draufsicht;

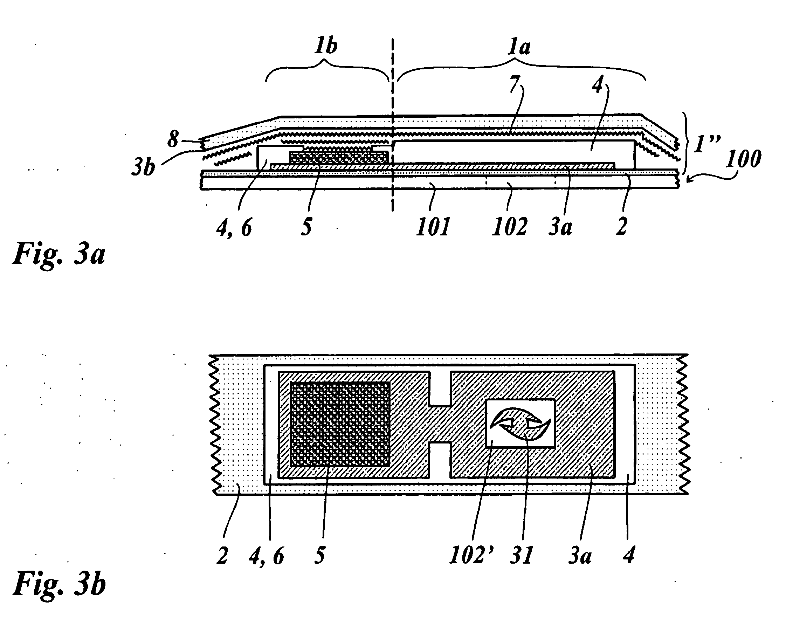

- Figur 3a: ein drittes Sicherheitselement auf einem Sicherheitsdokument im Querschnitt;
- Figur 3b: den ersten Schichtstapel des dritten Sicherheitselements aus Figur 3a in der Draufsicht;

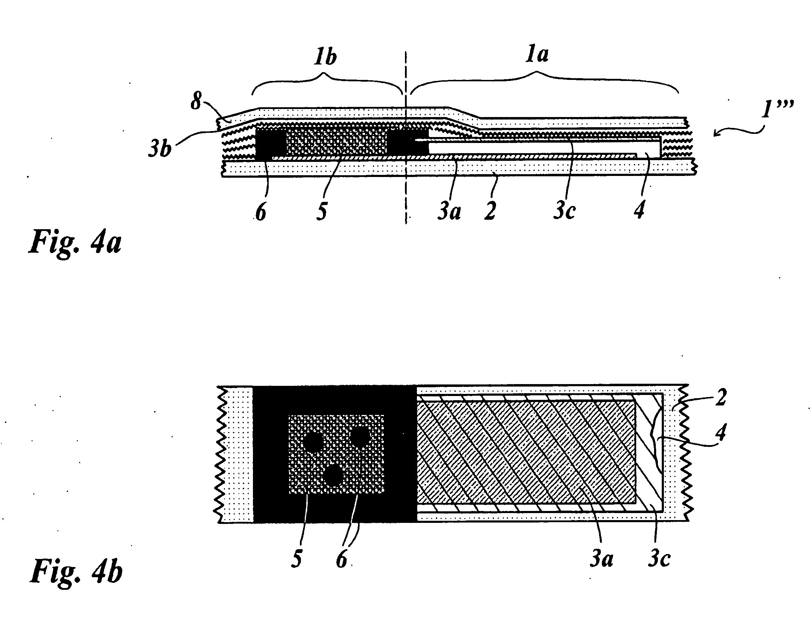

- Figur 4a: ein viertes Sicherheitselement im Querschnitt;
- Figur 4b: den ersten Schichtstapel des vierten Sicherheitselements aus Figur 4a in der Draufsicht;

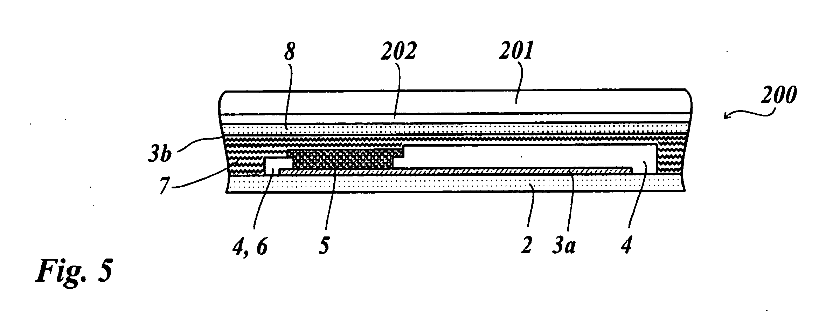

- Figur 5: eine Transferfolie zur Bildung des dritten Sicherheitselement gemäß Figur 3a im Querschnitt;

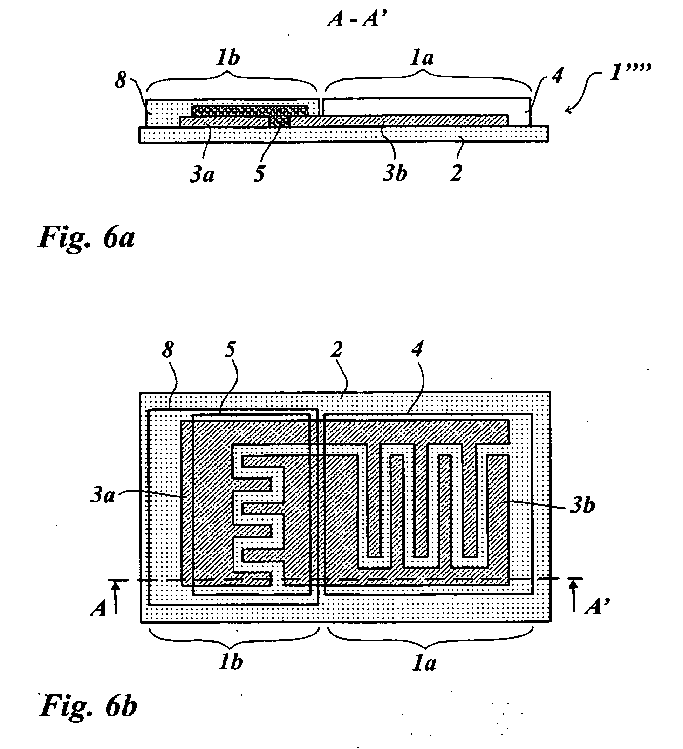

- Figur 6a: ein fünftes Sicherheitselement im Querschnitt A- A';
- Figur 6b: das fünfte Sicherheitselement aus Figur 6a in der Draufsicht;

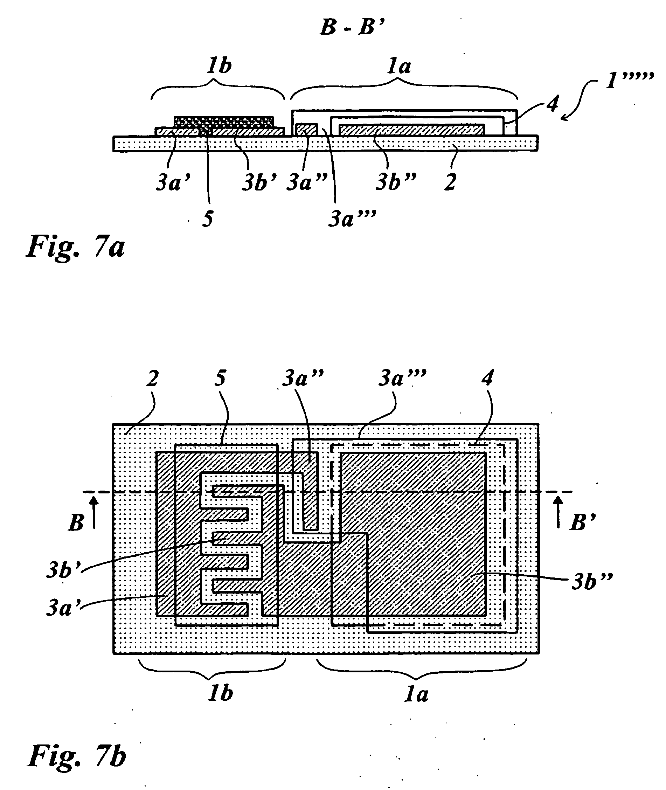

- Figur 7a: ein sechstes Sicherheitselement im Querschnitt B- B'; und
- Figur 7b: das sechste Sicherheitselement aus Figur 7a in der Draufsicht.

Figur 1a zeigt ein erstes Sicherheitselement 1 mit einer piezoelektrischen Energiequelle 1a und einem elektrisch steuerbaren Anzeigeelement 1b im Querschnitt. Auf einem ersten Trägerfilm 2 aus PET ist bereichsweise eine opake metallische erste Elektrodenschicht 3a angeordnet. Die erste Elektrodenschicht 3a ist auf dem ersten Trägerfilm 2 durch Aufdampfen oder Sputtern gebildet. Auf der ersten Elektrodenschicht 3a ist bereichsweise die transparente Schicht 4 aus piezoelektrischem Material, hier PVDF, in einer Schichtdicke von 15 µm angeordnet, welche die erste Elektrodenschicht 3a an drei von vier Kanten überragt. Die Schicht 4 aus PVDF ist durch Drucken einer Lösung enthaltend PVDF und nachfolgende Trocknung gebildet, welche weiterhin polarisiert wurde. Die Schicht 4 aus PVDF wird vorzugsweise mit einer, hier nicht gesondert dargestellten elektrisch leitenden Hilfsschicht bedeckt, welche beispielsweise gedruckt wird. Zwischen der Hilfsschicht und der ersten Elektrodenschicht 3a wird zur Polarisation der Schicht 4 aus PVDF kurzzeitig eine Spannung angelegt, die ein elektrisches Feld von mindestens 50 MV/m erzeugt.

Weiterhin ist auf der ersten Elektrodenschicht 3a die Anzeigeschicht 5 aus PDLC in einer Schichtdicke von 10 µm ausgebildet. Die Anzeigeschicht 5 ist durch Drucken einer Lösung enthaltend Präpolymer(e) und Flüssigkristallmaterial und eine nachfolgende Trocknung ausgebildet. Nach Ausbildung der Anzeigeschicht 5 ist eine opake farbige Stützschicht 6 aus einem UV-gehärteten Lack aufgebracht, die einen Rahmen um die Anzeigeschicht 5 bildet. Der erste Trägerfilm 2, die erste Elektrodenschicht 3a, die Schicht 4 aus PVDF, die Anzeigeschicht 5 und die Stützschicht 6 bilden einen ersten Schichtstapel (Draufsicht siehe Figur 1b). Die Bildung des ersten Schichtstapels erfolgt vorzugsweise, indem der erste Trägerfilm 2 von Rolle zu Rolle transportiert wird, wobei der erste Trägerfilm 2 von einer ersten Rolle abgezogen, mit den Schichten versehen und auf eine zweite Rolle aufgewickelt wird.

Eine transparente Kleberschicht 7 aus einem UV-Kleber mit einer Schichtdicke von 1 µm bedeckt die Schicht 4 aus PVDF oder gegebenenfalls die elektrisch leitende Hilfsschicht, die Anzeigeschicht 5 und die Stützschicht 6. Auf der Kleberschicht 7 befinden sich vollflächig eine transparente zweite Elektrodenschicht 3b aus PEDOT in einer Schichtdicke von 0,1 µm sowie eine transparente Schutzschicht 8 aus PET. Die Schutzschicht 8 ist in Form eines selbsttragenden zweiten Trägerfilms ausgebildet und bildet zusammen mit der zweiten Elektrodenschicht 3b und der Kleberschicht 7 einen zweiten Schichtstapel, welcher mit dem ersten Schichtstapel verbunden bzw. verklebt ist. Der zweite Schichtstapel wird insbesondere gebildet, indem der zweite Trägerfilm von Rolle zu Rolle transportiert wird, wobei der zweite Trägerfilm von einer ersten Rolle abgezogen, mit den Schichten 3b, 7 versehen und auf eine zweite Rolle aufgewickelt wird. Das Zusammenfügen des ersten und zweiten Schichtstapels erfolgt durch Lamination. Alternativ kann die zweite Elektrodenschicht auch auf den ersten Schichtstapel mittels einer Transferfolie aufgeprägt werden, so dass die selbsttragende Schutzschicht 8 entfällt. Stattdessen kann eine dünne, nicht selbsttragende Schutzlackschicht vorgesehen sein, die auf der Transferfolie vorgesehen ist, um zusammen mit der zweiten Elektrodenschicht auf den ersten Schichtstapel geprägt zu werden.

Wird keine elektrisch leitende Hilfsschicht auf der Schicht 4 aus PVDF angeordnet, so erfolgt die Polarisation der Schicht 4 aus PVDF durch Anlegen einer elektrischen Spannung zwischen der ersten Elektrodenschicht 3a und der zweiten Elektrodenschicht 3b.

Figur 1b zeigt den ersten Schichtstapel des ersten Sicherheitselements 1 aus Figur 1a in der Draufsicht, wobei die erste Elektrodenschicht 3a durch die transparente Schicht 4 aus PVDF hindurch sichtbar ist. Die Stützschicht 6 verdeckt die Ränder der Anzeigeschicht 5.

Figur 2a zeigt ein zweites Sicherheitselement 1' mit einer piezoelektrischen Energiequelle 1 a und einem elektrisch steuerbaren Anzeigeelement 1 b im Querschnitt. Auf einem ersten Trägerfilm 2 aus PET ist bereichsweise eine opake erste Elektrodenschicht 3a aus Metall angeordnet. Die erste Elektrodenschicht 3a ist auf dem ersten Trägerfilm 2 durch Aufdampfen oder Sputtern gebildet. Auf der ersten Elektrodenschicht 3a ist bereichsweise die transparente Schicht 4 aus piezoelektrischem Material, hier PVDF, in einer Schichtdicke von 20 µm angeordnet, welche die erste Elektrodenschicht 3a an allen vier Kanten überragt und einen Bereich zur Bildung der Anzeigeschicht 5 auf der ersten Elektrodenschicht 3a freilässt. Die Schicht 4 aus PVDF ist durch Drucken einer Lösung enthaltend PVDF und nachfolgende Trocknung gebildet, welche weiterhin wie oben angegeben polarisiert wurde.

Weiterhin ist auf der ersten Elektrodenschicht 3a die Anzeigeschicht 5 aus PDLC in einer Schichtdicke von 10 µm ausgebildet. Die Anzeigeschicht 5 ist durch Drucken einer Lösung enthaltend Präpolymer(e) und Flüssigkristallmaterial und eine nachfolgende Trocknung ausgebildet. Die Schicht 4 aus PVDF bildet im Bereich des Anzeigeelements 1 b gleichzeitig die Stützschicht 6, welche einen Rahmen um die Anzeigeschicht 5 bildet. Der erste Trägerfilm 2, die erste Elektrodenschicht 3a, die Schicht 4 aus PVDF bzw. die Stützschicht 6 und die Anzeigeschicht 5 bilden einen ersten Schichtstapel (Draufsicht siehe Figur 2b). Die Bildung des ersten Schichtstapels erfolgt vorzugsweise, indem der erste Trägerfilm 2 von Rolle zu Rolle transportiert wird, wobei der erste Trägerfilm 2 von einer ersten Rolle abgezogen, mit den Schichten versehen und auf eine zweite Rolle aufgewickelt wird.

Eine transparente Kleberschicht 7 aus einem UV-Kleber mit einer Schichtdicke von 2 µm bedeckt die Schicht 4 aus PVDF bzw. die Stützschicht 6 und die Anzeigeschicht 5. Auf der Kleberschicht 7 befinden sich vollflächig eine transparente zweite Elektrodenschicht 3b aus ITO in einer Schichtdicke von 50 nm sowie eine transparente Schutzschicht 8 aus PET. Die Schutzschicht 8 ist in Form eines selbsttragenden zweiten Trägerfilms ausgebildet und bildet zusammen mit der zweiten Elektrodenschicht 3b und der Kleberschicht 7 einen zweiten Schichtstapel, welcher mit dem ersten Schichtstapel verbunden bzw. verklebt ist. Der zweite Schichtstapel wird insbesondere gebildet, indem der zweite Trägerfilm von Rolle zu Rolle transportiert wird, wobei der zweite Trägerfilm von einer ersten Rolle abgezogen, mit den Schichten versehen und auf eine zweite Rolle aufgewickelt wird. Das Zusammenfügen des ersten und zweiten Schichtstapels erfolgt durch Lamination.

Figur 2b zeigt den ersten Schichtstapel des zweiten Sicherheitselements 1' aus Figur 2a in der Draufsicht, wobei die erste Elektrodenschicht 3a durch die transparente Schicht 4 aus PVDF bzw. die Stützschicht 6 hindurch sichtbar ist.

Figur 3a zeigt im Querschnitt ein drittes Sicherheitselement 1" auf einem Sicherheitsdokument 100, welches ein Substrat 101 aus Papier mit einem transparenten Bereich 102 aufweist. Das dritte Sicherheitselement 1 " weist eine piezoelektrische Energiequelle 1a und ein elektrisch steuerbares Anzeigeelement 1b auf. Auf einem ersten Trägerfilm 2 aus PET, welcher beispielsweise auf das Substrat 101 aufgeklebt ist, ist bereichsweise eine semitransparente erste Elektrodenschicht 3a aus Metall angeordnet. Die erste Elektrodenschicht 3a ist auf dem ersten Trägerfilm 2 durch Aufdampfen oder Sputtern gebildet. Auf der ersten Elektrodenschicht 3a ist bereichsweise die transparente Schicht 4 aus piezoelektrischem Material, hier PVDF, in einer Schichtdicke von 20 µm angeordnet, welche die erste Elektrodenschicht 3a an allen vier Kanten überragt und einen Bereich zur Bildung der Anzeigeschicht 5 auf der ersten Elektrodenschicht 3a freilässt. Die Schicht 4 aus PVDF ist durch Drucken einer Lösung enthaltend PVDF und nachfolgende Trocknung gebildet, welche weiterhin wie oben beschrieben polarisiert wurde.

Weiterhin ist auf der ersten Elektrodenschicht 3a die Anzeigeschicht 5 aus PDLC in einer Schichtdicke von 10 µm ausgebildet. Die Anzeigeschicht 5 ist durch Drucken einer Lösung enthaltend Präpolymer(e) und Flüssigkristallmaterial und eine nachfolgende Trocknung ausgebildet. Die Schicht 4 aus PVDF bildet im Bereich des Anzeigeelements 1b gleichzeitig die Stützschicht 6, welche einen Rahmen um die Anzeigeschicht 5 bildet. Der erste Trägerfilm 2, die erste Elektrodenschicht 3a, die Schicht 4 aus PVDF bzw. die Stützschicht 6 und die Anzeigeschicht 5 bilden einen ersten Schichtstapel (Draufsicht siehe Figur 3b). Die Bildung des ersten Schichtstapels erfolgt vorzugsweise, indem der erste Trägerfilm 2 von Rolle zu Rolle transportiert wird, wobei der erste Trägerfilm 2 von einer ersten Rolle abgezogen, mit den Schichten versehen und auf eine zweite Rolle aufgewickelt wird.

Eine transparente Kleberschicht 7 aus einem UV-Kleber mit einer Schichtdicke von 1 µm bedeckt die Schicht 4 aus PVDF bzw. die Stützschicht 6 und die Anzeigeschicht 5. Auf der Kleberschicht 7 befinden sich vollflächig eine transparente zweite Elektrodenschicht 3b aus PEDOT in einer Schichtdicke von 0,1 µm sowie eine transparente Schutzschicht 8 aus PET, die als nicht selbsttragende Schutzlackschicht ausgebildet ist. Die Schutzschicht 8 bildet zusammen mit der zweiten Elektrodenschicht 3b und der Kleberschicht 7 einen zweiten Schichtstapel, welcher mit dem ersten Schichtstapel verbunden bzw. verklebt ist.

Der zweite Schichtstapel wird insbesondere gebildet, indem eine Trägerfolie 201 einer Transferfolie 200 (siehe Figur 5) mit einer darauf aufgebrachten Ablöseschicht 202 von Rolle zu Rolle transportiert wird, wobei die Trägerfolie 201 von einer ersten Rolle abgezogen, mit der Schutzlackschicht und den weiteren Schichten versehen und auf eine zweite Rolle aufgewickelt wird. Das Zusammenfügen des ersten und zweiten Schichtstapels erfolgt durch Lamination. Danach liegt eine Transferfolie 200 enthaltend das Folienelement zur Bildung des Sicherheitselements 1 " vor. Die Transferfolie 200 wird in einem Prägeprozess unter Temperatureinfluss gegen das Sicherheitsdokument 100 gedrückt und bereichsweise am Substrat 101 fixiert, vorzugsweise durch eine Klebstoffschicht, die auf dem Substrat 101 oder dem ersten Trägerfilm 2 angeordnet sein kann. Schließlich wird die Trägerfolie 201 der Transferfolie 200 abgezogen, wobei das Sicherheitselement 1 " auf dem Substrat 101 verbleibt.

Figur 3b zeigt den ersten Schichtstapel des dritten Sicherheitselements 1 " aus Figur 3a in der Draufsicht, wobei die erste Elektrodenschicht 3a durch die transparente Schicht 4 aus PVDF bzw. die Stützschicht 6 hindurch sichtbar ist. Die erste Elektrodenschicht 3a weist eine Öffnung 102' auf, welche nach der Fixierung des Sicherheitselements 1" am Substrat 101 deckungsgleich zum transparenten Bereich 102 angeordnet ist. Ein musterförmiger Bereich 31 der ersten Elektrodenschicht 3a ist innerhalb der Öffnung 102' noch vorhanden. Dieser ist mit einer hier nicht dargestellten diffraktiven Reliefstruktur versehen, so dass der musterförmige Bereich 31 einen optisch variablen Effekt zeigt.

Figur 4a zeigt ein viertes Sicherheitselement 1''' mit einer piezoelektrischen Energiequelle 1a und einem elektrisch steuerbaren Anzeigeelement 1b im Querschnitt. Auf einem ersten Trägerfilm 2 aus PET ist bereichsweise eine opake metallische erste Elektrodenschicht 3a angeordnet. Die erste Elektrodenschicht 3a ist auf dem ersten Trägerfilm 2 durch Aufdampfen oder Sputtern gebildet. Auf der ersten Elektrodenschicht 3a ist bereichsweise die transparente Schicht 4 aus piezoelektrischem Material, hier PVDF, in einer Schichtdicke von 20 µm angeordnet, welche die erste Elektrodenschicht 3a an drei von vier Kanten überragt. Die Schicht 4 aus PVDF ist durch Drucken einer Lösung enthaltend PVDF und nachfolgende Trocknung gebildet, welche weiterhin wie oben beschrieben polarisiert wurde. Auf die Schicht 4 aus PVDF ist eine elektrisch leitende Hilfsschicht 3c aus PEDOT aufgebracht, welche die elektrische Kontaktierung der Schicht 4 aus PVDF während des Polarisationsvorgangs verbessert.

Weiterhin ist auf der ersten Elektrodenschicht 3a eine opake farbige Stützschicht 6 aus einem UV-gehärteten Lack aufgebracht, die einen Rahmen und drei punktförmige Stege für die danach auf der ersten Elektrodenschicht 3a gebildete Anzeigeschicht 5 bildet. Die Anzeigeschicht 5 aus PDLC ist in einer Schichtdicke von 10 µm und durch Drucken einer Lösung enthaltend Präpolymer(e) und Flüssigkristallmaterial sowie nachfolgende Trocknung ausgebildet. Der erste Trägerfilm 2, die erste Elektrodenschicht 3a, die Schicht 4 aus PVDF, die Hilfsschicht 3c, die Anzeigeschicht 5 und die Stützschicht 6 bilden einen ersten Schichtstapel (Draufsicht siehe Figur 4b). Die Bildung des ersten Schichtstapels erfolgt vorzugsweise, indem der erste Trägerfilm 2 von Rolle zu Rolle transportiert wird, wobei der erste Trägerfilm 2 von einer ersten Rolle abgezogen, mit den Schichten versehen und auf eine zweite Rolle aufgewickelt wird.

Eine transparente Kleberschicht 7 aus einem Heißkleber mit einer Schichtdicke von 2 µm bedeckt vollflächig die Schicht 4 aus PVDF, die Anzeigeschicht 5 und die Stützschicht 6. Auf der Kleberschicht 7 befinden sich vollflächig eine transparente zweite Elektrodenschicht 3b aus ITO in einer Schichtdicke von 50 nm sowie eine transparente Schutzschicht 8 aus PET. Die Schutzschicht 8 ist in Form eines selbsttragenden zweiten Trägerfilms ausgebildet und bildet zusammen mit der zweiten Elektrodenschicht 3b und der Kleberschicht 7 einen zweiten Schichtstapel, welcher mit dem ersten Schichtstapel verbunden bzw. verklebt ist. Der zweite Schichtstapel wird insbesondere gebildet, indem der zweite Trägerfilm von Rolle zu Rolle transportiert wird, wobei der zweite Trägerfilm von einer ersten Rolle abgezogen, mit den Schichten versehen und auf eine zweite Rolle aufgewickelt wird. Das Zusammenfügen des ersten und zweiten Schichtstapels erfolgt durch Lamination.

Figur 4b zeigt den ersten Schichtstapel des vierten Sicherheitselements 1"' aus Figur 4a in der Draufsicht, wobei die erste Elektrodenschicht 3a durch die transparente Hilfsschicht 3c und die transparente Schicht 4 aus PVDF hindurch sichtbar ist. Die Stützschicht 6 verschleiert optisch die Ränder der Anzeigeschicht 5.

Figur 5 zeigt im Querschnitt einen Abschnitt einer Transferfolie 200 zur Bildung des dritten Sicherheitselement 1 " gemäß Figur 3a, welches als Schutzschicht 8 eine nicht selbsttragende Schutzlackschicht aufweist. Auf einer Trägerfolie 201 der Transferfolie 200 ist eine wachsartige Ablöseschicht 202 vollflächig aufgebracht, auf welche die als Schutzlackschicht ausgebildete Schutzschicht 8 vollflächig aufgebracht ist. Auf der, der Trägerfolie 201 abgewandten Seite der Transferfolie 200 kann weiterhin eine hier nicht dargestellte Klebstoffschicht angeordnet sein, um das Sicherheitselement 1 " auf dem Sicherheitsdokument 100 (siehe Figur 3a) zu fixieren und die Trägerfolie 200 davon ablösen zu können. Alternativ kann der erste Trägerfilm 2 hier ohne eine tragende Funktion vorhanden sein und als nicht selbsttragende Kleberschicht ausgebildet sein, da die Trägerfunktion von der Trägerfolie 201 bereitgestellt wird.

Figur 6a zeigt ein fünftes Sicherheitselement 1"" im Querschnitt A- A' gemäß der zweiten Ausführungsform mit einer piezoelektrischen Energiequelle 1a und einem elektrisch steuerbaren Anzeigeelement 1b. Auf einem ersten Trägerfilm 2 aus PET sind bereichsweise eine opake erste Elektrodenschicht 3a sowie eine opake zweite Elektrodenschicht 3b, jeweils aus Metall, angeordnet. Die erste und die zweite Elektrodenschicht 3a, 3b sind auf dem ersten Trägerfilm 2 in einer Ebene nebeneinander und elektrisch voneinander isoliert durch Aufdampfen oder Sputtern gebildet. Auf der ersten und der zweiten Elektrodenschicht 3a, 3b ist im Bereich der Energiequelle 1 a eine transparente Schicht 4 aus piezoelektrischem Material, hier PVDF, in einer Schichtdicke von 15 µm angeordnet. Die Schicht 4 aus PVDF ist durch Drucken einer Lösung enthaltend PVDF und nachfolgende Trocknung gebildet, welche weiterhin polarisiert wurde, indem eine Spannung zwischen der ersten und der zweiten Elektrodenschicht 3a, 3b angelegt wurde.

Weiterhin ist auf der ersten und der zweiten Elektrodenschicht 3a, 3b im Bereich des Anzeigeelements 1b die Anzeigeschicht 5 aus PDLC in einer Schichtdicke von 10 µm ausgebildet. Die Anzeigeschicht 5 ist durch Drucken einer Lösung enthaltend Präpolymer(e) und Flüssigkristallmaterial und eine nachfolgende Trocknung ausgebildet. Nach Ausbildung der Anzeigeschicht 5 kann eine, hier nicht dargestellte opake farbige Stützschicht aus einem UV-gehärteten Lack aufgebracht werden, die einen Rahmen um die Anzeigeschicht 5 bildet. Eine transparente Schutzschicht 8 aus PET bedeckt hier nur die Anzeigeschicht 5, könnte weiterhin aber auch die Schicht 4 aus piezoelektrischem Material bedecken.

Figur 6b zeigt das fünfte Sicherheitselements 1'''' aus Figur 6a in der Draufsicht, wobei die erste und die zweite Elektrodenschicht 3a, 3b im Bereich der Energiequelle 1a durch die transparente Schicht 4 aus PVDF sowie im Bereich des Anzeigeelements 1 b durch die Anzeigeschicht 5 und die Schutzschicht 8 hindurch sichtbar sind.

Figur 7a zeigt ein sechstes Sicherheitselement 1'''' im Querschnitt B-B' gemäß einer Kombination der ersten und der zweiten Ausführungsform. Eine piezoelektrische Energiequelle 1 a ist gemäß der ersten Ausführungsform ausgebildet, bei der eine Elektrodenschicht unterhalb der Schicht aus piezoelektrischem Material und eine Elektrodenschicht oberhalb der Schicht aus piezoelektrischem Material angeordnet ist. Das elektrisch steuerbare Anzeigeelement 1 b ist gemäß der zweiten Ausführungsform ausgebildet, bei der die beide Elektrodenschichten unterhalb der Anzeigeschicht in gleicher Ebene und elektrisch voneinander isoliert nebeneinander angeordnet sind.

Auf einem ersten Trägerfilm 2 aus PET sind gemäß Figur 7a im Bereich des Anzeigeelements 1b bereichsweise eine opake metallische erste Elektrodenschicht 3a' sowie eine opake metallische zweite Elektrodenschicht 3b' angeordnet. Die erste und die zweite Elektrodenschicht 3a', 3b' sind auf dem ersten Trägerfilm 2 in einer Ebene nebeneinander und elektrisch voneinander isoliert durch Aufdampfen oder Sputtern gebildet. Weiterhin ist auf der ersten und der zweiten Elektrodenschicht 3a', 3b' im Bereich des Anzeigeelements 1b die Anzeigeschicht 5 aus PDLC in einer Schichtdicke von 10 µm ausgebildet. Die Anzeigeschicht 5 ist durch Drucken einer Lösung enthaltend Präpolymer(e) und Flüssigkristallmaterial und eine nachfolgende Trocknung ausgebildet. Vor oder nach Ausbildung der Anzeigeschicht 5 kann eine, hier nicht dargestellte opake farbige Stützschicht aus einem UV-gehärteten Lack aufgebracht sein, die einen Rahmen um die Anzeigeschicht 5 bildet.

Auf dem ersten Trägerfilm 2 ist gemäß Figur 7a weiterhin im Bereich der Energiequelle 1 a bereichsweise eine weitere zweite Elektrodenschicht 3b" angeordnet, die durch eine transparente Schicht 4 aus piezoelektrischem Material, hier PVDF, in einer Schichtdicke von 15 µm bereichsweise bedeckt ist. Die zweite Elektrodenschicht 3b' und die weitere zweite Elektrodenschicht 3b" sind elektrisch leitend miteinander verbunden und einstückig ausgeführt. Auf der Schicht 4 aus PVDF ist durch Drucken eine weitere erste Elektrodenschicht 3a"' aus PEDOT gebildet, welche mit der ersten Elektrodenschicht 3a' über deren Bereich 3a" elektrisch leitend verbunden ist.

Die Schicht 4 aus PVDF ist durch Drucken einer Lösung enthaltend PVDF und nachfolgende Trocknung gebildet, welche weiterhin polarisiert ist, indem eine Spannung zwischen der weiteren ersten Elektrodenschicht 3a"' und der weiteren zweiten Elektrodenschicht 3b" angelegt wurde.

Eine transparente Schutzschicht, die zur besseren Übersicht hier nicht dargestellt wurde, kann das Anzeigeelement 1b und/oder die Energiequelle 1a bedecken.

Figur 7b zeigt das sechste Sicherheitselements 1'"" aus Figur 7a in der Draufsicht, wobei die erste und die zweite Elektrodenschicht 3a', 3b' im Bereich des Anzeigeelements 1 b durch die Anzeigeschicht 5 und gegebenenfalls die Schutzschicht hindurch sichtbar sind und wobei im Bereich der Energiequelle 1 a die weitere zweite Elektrodenschicht 3b" durch die transparente Schicht 4 aus PVDF und die weitere erste Elektrodenschicht 3a"' hindurch sichtbar ist.

Die Figurendarstellungen zeigen lediglich beispielhaft mögliche Aufbauten des erfindungsgemäßen Sicherheitselements und es sind für den Fachmann in Kenntnis der Erfindung eine Vielzahl weiterer Sicherheitselemente herstellbar, ohne dabei erfinderisch tätig werden zu müssen oder den Erfindungsgedanken zu verlassen.

## Patentansprüche

1. Sicherheitselement (1, 1', 1 ", 1''',1"", 1''''') zur Kennzeichnung eines Sicherheitsdokuments (100), insbesondere einer Banknote, eines Wertpapiers oder eines Papierdokuments, mit mindestens einem elektrisch steuerbaren Anzeigeelement (1 b) und mindestens einer, das mindestens eine Anzeigeelement (1b) steuernden piezoelektrischen Energiequelle (1a), wobei vorgesehen ist, dass das Sicherheitselement (1, 1', 1 ", 1"', 1"", 1""') durch einen flexiblen mehrschichtigen Folienkörper gebildet ist, welcher das mindestens eine elektrisch steuerbare Anzeigeelement (1 b) enthaltend eine Anzeigeschicht (5) mit in einem elektrischen Feld ausrichtbaren Flüssigkristallen und die mindestens eine, das mindestens eine Anzeigeelement (1b) steuernde piezoelektrische Energiequelle (1a) mit mindestens einer Schicht (4) aus piezoelektrischem Material umfasst, **dadurch gekennzeichnet**, daβ das Sicherheitselement (1, 1', 1 ", 1"', 1"", 1'"") in Richtung senkrecht zur Ebene des Folienkörpers eine Dicke von maximal 70 µm aufweist, und dass der Folienkörper einen optionalen ersten Trägerfilm (2), eine zumindest bereichsweise ausgebildete erste Elektrodenschicht (3a), eine bereichsweise auf der ersten Elektrodenschicht (3a) ausgebildete Schicht (4) aus piezoelektrischem Material sowie eine bereichsweise und in gleicher Ebene auf der ersten Elektrodenschicht (3a) ausgebildete Anzeigeschicht (5), weiterhin eine zumindest bereichsweise ausgebildete optional transparente Kleberschicht (7), eine zumindest bereichsweise ausgebildete transparente zweite Elektrodenschicht (3b) und optional eine transparente Schutzschicht (8) aufweist.

2. Sicherheitselement nach Anspruch 1,
**dadurch gekennzeichnet,**
**dass** der Folienkörper eine Stützschicht (6) aufweist, welche senkrecht zur Ebene des Folienkörpers gesehen einen Rahmen um zumindest Bereiche der Anzeigeschicht (5) bildet.

3. Sicherheitselement nach einem der Ansprüche 1 bis 2,
**dadurch gekennzeichnet,**
**dass** die Stützschicht (6) ein visuell erkennbares Designelement bildet.

4. Sicherheitselement nach einem der Ansprüche 1 bis 3,
**dadurch gekennzeichnet,**
**dass** die Schicht (4) aus piezoelektrischem Material eine Schichtdicke von maximal 30 µm, insbesondere von maximal 5 µm aufweist.

5. Sicherheitselement nach einem der Ansprüche 1 bis 4,
**dadurch gekennzeichnet,**
**dass** das piezoelektrische Material ein Polymer, insbesondere vom Typ Polyvinylidenfluorid PVDF, ist.

6. Sicherheitselement nach einem der Ansprüche 1 bis 5,
**dadurch gekennzeichnet,**
**dass** die Anzeigeschicht (5) eine Schichtdicke von maximal 20 µm, insbesondere von maximal 5 µm aufweist.

7. Sicherheitselement nach einem der Ansprüche 1 bis 6,
**dadurch gekennzeichnet,**
**dass** die Anzeigeschicht (5) unter Einwirkung des elektrischen Feldes transparent ist.

8. Sicherheitselement nach einem der Ansprüche 1 bis 7,
**dadurch gekennzeichnet,**
**dass** die Anzeigeschicht (5) aus mindestens einer Schicht PDLC gebildet ist.

9. Sicherheitselement nach einem der Ansprüche 1 bis 8,
**dadurch gekennzeichnet,**
**dass** die erste(n) und gegebenenfalls zweite(n) Elektrodenschicht(en) (3a;3a';3b; 3b'; 3b") eine diffraktive Reliefstruktur aufweist, welche einen optisch variablen Effekt generiert.

10. Sicherheitselement nach Anspruch 9,
**dadurch gekennzeichnet,**
**dass** die Reliefstruktur in einem, mit der Schicht (4) aus piezoelektrischem Material überlappenden ersten Bereich der ersten und gegebenenfalls zweiten Elektrodenschicht(en) (3a; 3a';3b; 3b';3b") angeordnet ist und/oder in einem, mit der Anzeigeschicht (5) überlappenden zweiten Bereich der ersten und gegebenenfalls zweiten Elektrodenschicht(en) (3a; 3a';3b; 3b';3b") angeordnet ist.

11. Sicherheitsdokument (100), insbesondere eine Banknote, ein Wertpapier oder ein Papierdokument, mit mindestens einem Sicherheitselement (1, 1', 1", 1"', 1"", 1""') nach einem der Ansprüche 1 bis 10, wobei das Sicherheitsdokument (100) eine Dicke von maximal 200 µm aufweist.

12. Sicherheitsdokument nach Anspruch 11,
**dadurch gekennzeichnet,**
**dass** zumindest das elektrisch steuerbare Anzeigeelement (1b) des mindestens einen Sicherheitselements (1, 1', 1", 1"', 1 "", 1 "''') zumindest bereichsweise in einem transparenten Bereich (102) des Sicherheitsdokuments (100) angeordnet ist.

13. Sicherheitsdokument nach Anspruch 11 oder 12,
**dadurch gekennzeichnet,**
**dass** das mindestens eine Sicherheitselement (1, 1', 1", 1"', 1"", 1""') auf dem Sicherheitsdokument (100) angeordnet oder in dieses eingebettet ist.

14. Verfahren zur Herstellung eines Sicherheitselements nach Anspruch 1,
**dadurch gekennzeichnet,**
**dass** ein erster Schichtstapel gebildet wird, indem auf dem ersten Trägerfilm (2) zumindest die erste Elektrodenschicht (3a), die Schicht (4) aus piezoelektrischem Material, die Anzeigeschicht (5) und die optionale Stützschicht (6) gebildet werden,
**dass** ein zweiter Schichtstapel gebildet wird, indem auf der Schutzschicht (8) zumindest die zweite Elektrodenschicht (3b) und die Kleberschicht (7) gebildet werden, und
**dass** der erste und der zweite Schichtstapel verbunden werden, indem die Kleberschicht (7) des zweiten Schichtstapels auf eine, dem ersten Trägerfilm (2) abgewandte Seite des ersten Schichtstapels laminiert wird.

15. Transferfolie (200) mit mindestens einem Sicherheitselement nach einem der Ansprüche 1 bis 13, wobei das mindestens eine Sicherheitselement auf einer Trägerfolie (201) der Transferfolie (200) angeordnet ist und von dieser ablösbar ist.

## Claims

1. Security element (1, 1', 1'', 1''', 1'''', 1''''') for the identification of a security document (100), in particular a banknote, a valuable paper or a paper document, comprising at least one electrically controllable display element (1b) and at least one piezoelectric energy source (1a) which controls the at least one display element (1b), wherein it is provided that the security element (1, 1', 1'', 1'", 1"", 1'"") is formed by a flexible multilayered film body comprising the at least one electrically controllable display element (1b) containing a display layer (5) having liquid crystals that can be oriented in an electric field, and comprising the at least one piezoelectric energy source (1a) which controls the at least one display element (1b) and has at least one layer (4) composed of piezoelectric material, **characterized in that** the security element (1, 1', 1'', 1"', 1"", 1""') has a thickness of at most 70 µm in a direction perpendicular to the plane of the film body, and **in that** the film body has an optional first carrier film (2), a first electrode layer (3a) formed at least in regions, a layer (4) composed of piezoelectric material and formed in regions on the first electrode layer (3a), and also a display layer (5) formed in regions and in the same plane on the first electrode layer (3a), furthermore an optionally transparent adhesive layer (7) formed at least in regions, a transparent second electrode layer (3b) formed at least in regions, and optionally a transparent protective layer (8).

2. Security element according to Claim 1,
**characterized**
**in that** the film body has a supporting layer (6), which forms a frame around at least regions of the display layer (5) as viewed perpendicularly to the plane of the film body.

3. Security element according to either of Claims 1 and 2,
**characterized**
**in that** the supporting layer (6) forms a visually recognizable design element.

4. Security element according to any of Claims 1 to 3,
**characterized**
**in that** the layer (4) composed of piezoelectric material has a layer thickness of at most- 30 µm, in particular of at most 5 µm.

5. Security element according to any of Claims 1 to 4,
**characterized**
**in that** the piezoelectric material is a polymer, in particular of the polyvinylidene fluoride PVDF type.

6. Security element according to any of Claims 1 to 5,
**characterized**
**in that** the display layer (5) has a layer thickness of at most 20 µm, in particular of a most 5 µm.

7. Security element according to any of Claims 1 to 6,
**characterized**
**in that** the display layer (5) is transparent under the action of the electric field.

8. Security element according to any of Claims 1 to 7,
**characterized**
**in that** the display layer (5) is formed from at least one layer of PDLC.

9. Security element according to any of Claims 1 to 8,
**characterized**
**in that** the first and, if appropriate, second electrode layer(s) (3a; 3a'; 3b; 3b'; 3b") has (have) a diffractive relief structure which generates an optically variable effect.

10. Security element according to Claim 9,
**characterized**
**in that** the relief structure is arranged in a first region of the first and, if appropriate, second electrode layer(s) (3a; 3a'; 3b; 3b'; 3b"), said first region overlapping the layer (4) composed of piezoelectric material, and/or is arranged in a second region of the first and, if appropriate, second electrode layer(s) (3a; 3a'; 3b; 3b'; 3b"), said second region overlapping the display layer (5).

11. Security document (100), in particular a banknote, a valuable paper or a paper document, comprising at least one security element (1, 1', 1", 1"', 1"", 1""') according to any of Claims 1 to 10, wherein the security document (100) has a thickness of at most 200 µm.

12. Security document according to Claim 11,
**characterized**
**in that** at least the electrically controllable display element (1b) of the at least one security element (1, 1', 1'', 1''', 1'''', 1''''') is arranged at least in regions in a transparent region (102) of the security document (100).

13. Security document according to Claim 11 or 12,
**characterized**
**in that** the at least one security element (1, 1', 1'', 1''', 1'''', 1''''') is arranged on the security document (100) or is embedded into the latter.

14. Method for producing a security element according to Claim 1,
**characterized**
**in that** a first layer stack is formed by at least the first electrode layer (3a), the layer (4) composed of piezoelectric material, the display layer (5) and the optional supporting layer (6) being formed on the first carrier film (2),
**in that** a second layer stack is formed by at least the second electrode layer (3b) and the adhesive layer (7) being formed on the protective layer (8), and
**in that** the first and the second layer stacks are connected by the adhesive layer (7) of the second layer stack being laminated onto a side of the first layer stack which is remote from the first carrier film (2).

15. Transfer film (200) comprising at least one security element according to any of Claims 1 to 13, wherein the at least one security element is arranged on a carrier film (201) of the transfer film (200) and is releasable therefrom.

## Revendications

1. Elément de sécurité (1, 1' , 1'', 1''', 1'''', 1''''') pour caractériser un document de sécurité (100), en particulier un billet de banque, un titre ou un document en papier, avec au moins un élément d'affichage (1b) pouvant être commandé électriquement et au moins une source d'énergie (1a) piézoélectrique commandant au moins un élément d'affichage (1b), sachant qu'il est prévu que l'élément de sécurité (1, 1',1",1"',1"",1""') soit formé par un corps en film multicouche flexible qui comporte au moins un élément d'affichage (1b) pouvant être commandé électriquement contenant une couche d'affichage (5) dotée de cristaux liquides pouvant être orientés dans un champ électrique et au moins une source d'énergie (1a) piézoélectrique commandant au moins un élément d'affichage (1b) avec au moins une couche (4) de matériau piézoélectrique, **caractérisé en ce que** l'élément de sécurité (1, 1', 1'', 1''', 1'''', 1''''') présente, perpendiculairement au plan du corps en film, une épaisseur s'élevant à 70 µm au maximum, et **en ce que** le corps en film présente un premier film support optionnel (2), une première couche d'électrodes (3a) réalisée au moins par endroits, une couche (4), réalisée par endroits sur la première couche d'électrodes (3a), de matériau piézoélectrique ainsi qu'une couche d'affichage (5) réalisée par endroits et dans le même plan sur la première couche d'électrodes (3a), en outre une couche de colle (7) transparente en option, réalisée au moins par endroits, une seconde couche d'électrodes (3b) transparente réalisée au moins par endroits et en option une couche de protection transparente (8).

2. Elément de sécurité selon la revendication 1, **caractérisé en ce que** le corps en film présente une couche d'appui (6) qui forme, vu perpendiculairement au plan du corps en film, un cadre au moins autour des zones de la couche d'affichage (5).

3. Elément de sécurité selon l'une quelconque des revendications 1 à 2, **caractérisé en ce que** la couche d'appui (6) forme un élément de conception reconnaissable visuellement.

4. Elément de sécurité selon l'une quelconque des revendications 1 à 3, **caractérisé en ce que** la couche (4) de matériau piézoélectrique présente une épaisseur s'élevant à 30 µm au maximum, en particulier à 5 µm au maximum.

5. Elément de sécurité selon l'une quelconque des revendications 1 à 4, **caractérisé en ce que** le matériau piézoélectrique est un polymère, en particulier du type polyvinulidènefluorure PVDF.

6. Elément de sécurité selon l'une quelconque des revendications 1 à 5, **caractérisé en ce que** la couche d'affichage (5) présente une épaisseur s'élevant à 20 µm au maximum, en particulier à 5 µm au maximum.

7. Elément de sécurité selon l'une quelconque des revendications 1 à 6, **caractérisé en ce que** la couche d'affichage (5) est transparente sous l'effet du champ électrique.

8. Elément de sécurité selon l'une quelconque des revendications 1 à 7, **caractérisé en ce que** la couche d'affichage (5) est formée d'au moins une couche de PDLC.

9. Elément de sécurité selon l'une quelconque des revendications 1 à 8, **caractérisé en ce que** la première et éventuellement la seconde couche(s) d'électrodes (3a; 3a'; 3b; 3b'; 3b") présente(nt) une structure en relief diffractive générant un effet optique variable.

10. Elément de sécurité selon la revendication 9, **caractérisé en ce que** la structure en relief est disposée dans une première zone, recouvrant par la couche (4) de matériau piézoélectrique, de la première et éventuellement de la seconde couche(s) d'électrodes (3a; 3a'; 3b; 3b'; 3b") et/ou est disposée dans une seconde zone, recouvrant par la couche d'affichage (5), de la première et éventuellement de la seconde couche(s) d'électrode (3a; 3a'; 3b; 3b'; 3b'').

11. Document de sécurité (100), en particulier billet de banque, titre ou document en papier, comportant au moins un élément de sécurité (1, 1', 1", 1''', 1'''', 1''''') selon l'une quelconque des revendications 1 à 10, sachant que le document de sécurité (100) présente une épaisseur s'élevant à 200 µm au maximum.

12. Document de sécurité selon la revendication 11, **caractérisé en ce qu'**au moins l'élément d'affichage (1b) pouvant être commandé électriquement d'au moins un élément de sécurité (1, 1', 1'', 1''', 1'''', 1''''') est disposé au moins par endroits dans une zone transparente (102) du document de sécurité (100).

13. Document de sécurité selon la revendication 11 ou 12, **caractérisé en ce qu'**au moins un élément de sécurité (1, 1', 1'', 1''', 1'''', 1''''') est disposé sur le document de sécurité (100) ou noyé dans celui-ci.

14. Procédé de production d'un élément de sécurité selon la revendication 1, **caractérisé en ce qu'**un premier empilement de couches est constitué en formant sur le premier film support (2) au moins la première couche d'électrodes (3a), la couche (4) de matériau piézoélectrique, la couche d'affichage (5) et la couche d'appui optionnelle (6), **en ce qu'**un second empilement de couches est constitué en formant sur la couche de protection (8) au moins la seconde couche d'électrodes (3b) et la couche de colle (7) et **en ce que** le premier et le second empilements de couches sont reliés en laminant la couche de colle (7) du second empilement de couches sur un côté éloigné du premier film support (2) du premier empilement de couches.

15. Film de transfert (200) comportant au moins un élément de sécurité selon l'une quelconque des revendications 1 à 5, sachant qu'au moins un élément de sécurité est disposé sur un film support (201) du film de transfert,(200) et peut être séparé de celui-ci.
